# EUROPÄISCHE PATENTSCHRIFT

(11) **EP 3 900 115 B1**
(45) Veröffentlichungstag und Bekanntmachung des Hinweises auf die Patenterteilung: **24.08.2022**
(21) Anmeldenummer: 19835257.7
(22) Anmeldetag: 13.12.2019
(51) Int. Cl.: H01R 4/50, F16B 4/00, F16B 37/04, F16B 1/00, H01R 4/64

(54) **ELEKTRISCHER ANSCHLUSS**
ELECTRICAL CONNECTION
CONNEXION ÉLECTRIQUE

(30) Priorität: 21.12.2018 DE 202018107404 U
(43) Veröffentlichungstag der Anmeldung: 27.10.2021
(73) Patentinhaber: Fairchild Fasteners Europe - Camloc GmbH, 65779 Kelkheim (Taunus) (DE)
(72) Erfinder: JÜLING, Dieter, 65779 Kelkheim (DE)
(74) Vertreter: Keil & Schaafhausen Patentanwälte PartGmbB
(86) Internationale Anmeldenummer: PCT/EP2019/085166
(87) Internationale Veröffentlichungsnummer: WO 2020/126935

(56) Entgegenhaltungen:
- DE-A1- 10 243 759
- DE-B4- 10 243 759
- DE-U1-202018 101 358

## Beschreibung

Die Erfindung betrifft einen elektrischen Anschluss mit einem ersten elektrisch leitenden Bauteil, das eine Öffnung aufweist, einem Bolzen, der einen Kopf, der sich entlang einer ersten Längsachse erstreckt, sowie einen Gewindeabschnitt aufweist, und einem elektrisch leitenden plastisch verformbaren (Kontakt-)Ring mit einem Hülsenabschnitt, der eine Durchgangsöffnung mit einer zweiten Längsachse zur Aufnahme des Bolzens aufweist, und einem Anlagekragen.

Um zwischen einem plattenförmigen Bauteil, beispielsweise einer Wand, und einem Anschlussbolzen für ein Erdungskabel oder dgl. eine elektrisch leitende Verbindung zur Stromübertragung herzustellen, ist es bekannt, den Bolzen und die Wand mittels eines elektrisch leitfähigen Bauteils mechanisch so zu verbinden, dass beide mit dem elektrisch leitfähigen Bauteil in Kontakt stehen. Derartige elektrisch leitende Verbindungen erfordern eine besonders gute mechanische Verbindung.

Aus der DE 10 2016 112 782 A1 und der DE 20 2018 101 358 U1 ist ein solcher Einsatz zur Verbindung eines elektrischen Anschlusses mit einer Wand, beispielsweise einem dünnen Blech, bekannt. Um die elektrische Leitfähigkeit zwischen einem Kabel und einem Blech herzustellen, wird einen Bolzen (Massebolzen oder Erdungsbolzen) an einem Blech mittels einer deformierbaren Hülse befestigt. Hierfür muss die Verbindung Zugkräften sowie einem Drehmoment widerstehen, welche beispielsweise bei der Befestigung eines Kabelschuhs auf dem Gewindebolzen durch eine Mutter erzeugt werden können. Während der Installation des Gewindebolzens in der Hülse wird die Hülse definiert verformt. Dies bewirkt eine radiale Aufweitung der Hülse außerhalb des Bleches.

Aus der DE 10 2016 112 782 A1 ist es bekannt, die Innenkontur des elektrisch leitenden Kontaktringes und die korrespondierende Außenkontur des Zugbolzens so mit Radien zu versehen, dass über einen gewissen Klemmbereich (Grip) und besonders für dünne Bleche eine gute Flächenpressung in der Öffnung des ersten Bauteils erreicht wird. Zum einen ist dabei eine gute Flächenpressung für eine sichere Stromübertragung erforderlich, zum anderen dient sie der Aufnahme eines Drehmomentes, welches bei der Installation eines Kabelanschlusses mit einer Mutter in die Verbindung eingeleitet wird. Je dünner die Bleche werden, in die der Kontaktring montiert wird, um so schwieriger wird die Aufnahme des Montagedrehmomentes. Die DE 20 2018 101 358 U1 schlägt daher vor, die Öffnung sowie die Außenkontur des Hülsenabschnitts nicht rotationsymmetrisch auszubilden.

Bei diesen bekannten Lösungen wird es als verbesserungswürdig empfunden, dass bei großen Drehmomenten die Blechkontur in den Kontaktring einschneiden kann, und die Kontaktfläche abhängig von der Blechstärke zu gering werden kann, um höhere Ströme abzuleiten.

Die vorliegende Erfindung stellt sich daher die Aufgabe, einen elektrischen Anschluss der oben genannten Art zu schaffen, der ein hohes Drehmoment gut abstützen und hohe Ströme übertragen kann.

Diese Aufgabe wird mit einem elektrischen Anschluss mit den Merkmalen des Anspruchs 1 gelöst. Bei einem erfindungsgemäßen elektrischen Anschluss ist hierzu die Öffnung des ersten Bauteils mit einem Durchzug versehen. Unter einem Durchzug wird hierbei eine Aufkantung des Randes der Öffnung verstanden, die insbesondere umlaufendes ausgestaltet ist. Der Durchzug kann beispielsweise als ein um die Öffnung umlaufender Kragen ausgebildet sein, der auf der dem Anlagekragen abgewandten Seite des ersten Bauteils vorgesehen ist und aus der Ebene des ersten Bauteils vorsteht. Erfindungsgemäß wird somit in dem ersten Bauteil statt eines einfach zu stanzenden Durchgangsloches ein Durchzug eingebracht. Stanztechnisch ist das ebenso einfach zu realisieren und bietet den Vorteil einer vergrößerten Kontaktfläche für den Kontaktring. Hierdurch können zudem größere Drehmomente abgestützt werden.

In Abhängigkeit von dem verwendeten Material des ersten Bauteils kann der Durchzug als eine kleine Randaufkantung oder mit einer signifikanten Höhe von dem mehrfachen der Materialdicke des ersten Bauteils realisiert werden. So kann der Durchzug bei Stahl- oder Aluminiumblechen eine Höhe aufweisen, die um einen Faktor 1,5 bis 25, insbesondere um einen Faktor 2 bis 10, größer als die Dicke des Materials des ersten Bauteils ist.

Nach einer bevorzugten Ausführungsform der Erfindung ist der Durchzug, insbesondere leicht, d.h. im Rahmen einer Spielpassung mit einem Winkel von z.B. etwa 1° bis etwa 2°, konisch. Hierbei kann sich der Innendurchmesser der Öffnung zum freien Rand des Durchzugs hin verjüngen. Wenn der Durchzug leicht konisch ausgeführt ist, kann hierdurch der Kontaktdruck zusätzlich erhöht werden. Dies dient auch dazu, Toleranzen zu kompensieren.

Der Bolzen mit Gewindeabschnitt kann erfindungsgemäß ähnlich einer Schraube mit einem Schaft mit Außengewinde und einem gegenüber diesem vergrößerten Kopf ausgebildet sein, dessen Außenkontur an die Innenkontur des Rings angepasst ist. Bei der Installation wird ein z.B. mutterähnliches Werkzeug mit Innengewinde verwendet, um den Bolzen in den Ring zu ziehen und diesen zu verformen. Alternativ hierzu kann der Bolzen hohl oder mit einem Sackloch versehen sein und ein Innengewinde aufweisen, das mit einem Werkzeug mit Außengewinde zusammenwirkt, um den Bolzen in den Ring zu ziehen und diesen zu verformen. Bei dieser Ausgestaltung des Bolzens kann dieser (in axialer Richtung) vergleichsweise kurz sein, ggf. auch kürzer als der Ring. Mit anderen Worten muss der Bolzen keinen Schaft aufweisen und kann z.B. im Wesentlichen aus dem Kopf bestehen, dessen Außenkontur an die Innenkontur des Rings angepasst ist. Wenn nachfolgend auf den (Zug-)Bolzen Bezug genommen wird, sind damit beide Ausführungsformen, d.h. mit Außengewinde bzw. mit Innengewinde, gemeint.

Um im Rahmen des Leichtbaus und immer dünner werdenden Bauteilen eine Verbindung für elektrische Kontaktierungen herzustellen, die ein möglichst großes Drehmoment abfangen kann, ist nach einer Ausführungsform der Erfindung die Öffnung des ersten Bauteils nicht rotationssymmetrisch und der Hülsenabschnitt weist wenigstens bereichsweise eine nicht rotationsymmetrische Außenkontur auf. Mit anderen Worten wird statt des Abstützens des Drehmoments nur durch Reibschluss, d.h. durch rein rotationssymmetrischen Konturen indem ein Zugbolzen einen Kontaktring radial aufgeweitet, für geringe Blechstärken eine Drehmomentabstützung über die äußere Formkontur des Rings vorgeschlagen. Dies stellt gleichzeitig einen ausreichenden Anpressdruck an die Bohrungswand sicher, was für eine dichte Verbindung und eine ausreichende Stromübertragung vorteilhaft ist.

Hierbei können die Innenkontur des Rings und des Zugbolzens ebenfalls der Außenkontur des Rings angepasst sein, um eine gleichmäßige Wandstärke des Rings zu erhalten. Alternativ kann die innere Kontur des Rings weiterhin rotationssymmetrisch ausgeführt sein. Es besteht also entweder nur ein Formschluss zwischen dem Ring und der Wand oder dgl. Bauteil, wobei die Innenkontur rotationssymmetrisch bleiben kann, oder die Formkontur ist innen und außen am Ring vorgesehen und damit ggf. auch außen am Kopf, wodurch umlaufend zumindest annähernd die gleiche Wandstärke des Rings bestehen bleibt.

Nach einer Ausführungsform weist der Hülsenabschnitt eine im Wesentlichen zylindrische Außenkontur mit wenigstens einer, insbesondere parallel zur Längsachse ausgerichteten, Abflachung auf. Alternativ kann der Hülsenabschnitt wenigstens bereichsweise eine vieleckige Außenkontur aufweisen. Dabei ist jeweils die Außenkontur des Hülsenabschnitts vorzugsweise derart an die Innenkontur der nicht rotationssymmetrischen Öffnung der Wand angepasst, dass der Hülsenabschnitt drehfest in der nicht rotationssymmetrischen Öffnung der Wand geführt ist.

Auch die Außenkontur des Kopfes kann derart an die Innenkontur des Hülsenabschnitts angepasst sein, dass der Kopf drehfest in dem Hülsenabschnitt geführt ist.

Damit der Ring sich an dem plattenförmigen ersten Bauteile abstützen kann, wenn der Bolzen eine Zugkraft auf den Ring ausübt, weist der Anlagekragen einen relativ zu dem übrigen Ring größeren Außendurchmesser aufweist. Hierbei kann sich der Anlagekragen verformen. Dies ist dann besonders gut möglich, wenn der Ring aus einem weicheren Material als der Bolzen besteht. Eine definierte Verformung des Rings bzw. des Anlagekragens wird auch dadurch begünstigt, wenn der Anlagekragen radial durch eine Nut von dem Hülsenabschnitt des Rings beabstandet ist.

Hinsichtlich der Innenkontur des Rings und der Außenkontur des Kopfes ist der elektrische Anschluss nach der vorliegenden Erfindung beispielsweise wie in der DE 10 2016 112 782 A1 beschrieben ausgebildet. So kann der Kopf eine Außenkontur aufweisen, die wenigstens bereichsweise durch Rotation einer mit einem ersten Radius gekrümmten und von der ersten Längsachse beabstandeten ersten Linie um die erste Längsachse erzeugt und wenigstens bereichsweise größer als die Innenkontur der Durchgangsöffnung des Hülsenabschnitts ist. Weiter kann die Durchgangsöffnung des Rings eine Innenkontur aufweisen, die wenigstens bereichsweise durch Rotation einer mit einem zweiten Radius gekrümmten und von der zweiten Längsachse beabstandeten zweiten Linie um die zweite Längsachse erzeugt ist, wobei der Abstand der zweiten gekrümmten Linie von der zweiten Längsachse sich von einem Ende zum gegenüberliegenden Ende des Rings vergrößert. Insbesondere ermöglicht es die Gestaltung der Innenkontur des Rings und der Außenkontur des Kopfes als Rotationskörper, die durch gekrümmte Linien erzeugt sind, dass definierte Bereiche des Rings durch den Kopf des Bolzens gezielt durch Aufweitung verformt werden.

Es hat sich als besonders vorteilhaft erwiesen, wenn die Außenkontur und die Innenkontur derart aufeinander abgestimmt sind, dass der Ring in einem im montierten Zustand in den Durchgangsöffnungen der zu verbindenden Bauteile gelegen Bereich radial aufgeweitet wird und/oder dass der Ring in einem im montierten Zustand außerhalb der Durchgangsöffnungen der Bauteile gelegen Bereich unter Ausbildung einer Wulst oder eines Überstands radial aufgeweitet wird. Hierdurch wird eine besonders gute mechanische Verbindung des Rings mit den Bauteilen sowie des Bolzens mit dem Ring erreicht, was zu einem niedrigen elektrischen Kontaktwiderstand führt. Eine definierte lokale Umformung des Rings durch den Kopf des Bolzens bewirkt zudem, dass die hierfür erforderlichen Kräfte vergleichsweise gering sind.

Die Gestaltung der Radien und die Anordnung der Linien, welche die Außenkontur des Kopfes bzw. die Innenkontur der Durchgangsöffnung bilden, ist vorzugsweise so gewählt, dass der dem Schaft zugewandte Bereich des Kopfes mit einer Spielpassung in den Bereich der Durchgangsöffnung des Rings eingesetzt werden kann, welcher den größeren Durchmesser aufweist. Auch der Außendurchmesser des Schafts des Bolzens ist vorzugsweise kleiner als der kleinste Innendurchmesser der Durchgangsöffnung des Rings. Vorzugsweise ist der erste Radius von dem zweiten Radius verschieden. Insbesondere ist der erste Radius kleiner als der zweite Radius. Dies bewirkt, dass der Ring, und gegebenenfalls auch der Bolzen, plastisch verformt werden, wenn der Kopf des Bolzens in die Durchgangsöffnung des Rings gepresst wird. Hierdurch wird eine besonders gleichmäßige Verformung des Rings erzeugt, die den Ring definiert in Anlage mit den Innenwandungen der Durchgangsöffnung der Wand bringen kann.

Der elektrische Anschluss weist zusätzlich eine Mutter auf, die mit dem Bolzen verschraubt werden kann, um diesen in den Ring zu ziehen. Zudem kann eine solche Mutter eine Anschlussklemme und/oder einen Kabelschuh an dem Bolzen befestigen.

Um eine ungewünschte Drehung des Bolzens relativ zu dem Ring zumindest zu erschweren, kann alternativ oder zusätzlich zu den oben beschriebenen Maßnahmen die Außenkontur des Kopfes bereichsweise mit einer Profilierung versehen sein. Eine solche Profilierung kann beispielsweise eine Rändelung sein, die insbesondere in einem dem Schaft abgewandten Bereich des Kopfes vorgesehen ist. Alternativ oder zusätzlich hierzu kann die Profilierung auch Längsnuten und/oder Längsrippen aufweisen. Eine solche Profilierung kann auch in der Innenkontur des Rings vorgesehen sein.

Weitere Merkmale, Vorteile und Anwendungsmöglichkeiten der vorliegenden Erfindungen ergeben sich auch aus der nachfolgenden Beschreibung von Ausführungsbeispielen und unter Bezugnahme auf die Zeichnungen.

Es zeigen schematisch:
- Figur 1: in Schnittansicht einen bekannten elektrischen Anschluss,
- Figur 2: in Schnittansicht ein plattenförmiges Bauteil eines erfindungsgemäßen elektrischen Anschlusses,
- Figur 3: in teilweise geschnittene Seitenansicht den erfindungsgemäßen elektrischen Anschluss, und
- Figur 4: in Schnittnsicht eine weitere Ausführungsform eines elektrischen Anschlusses.

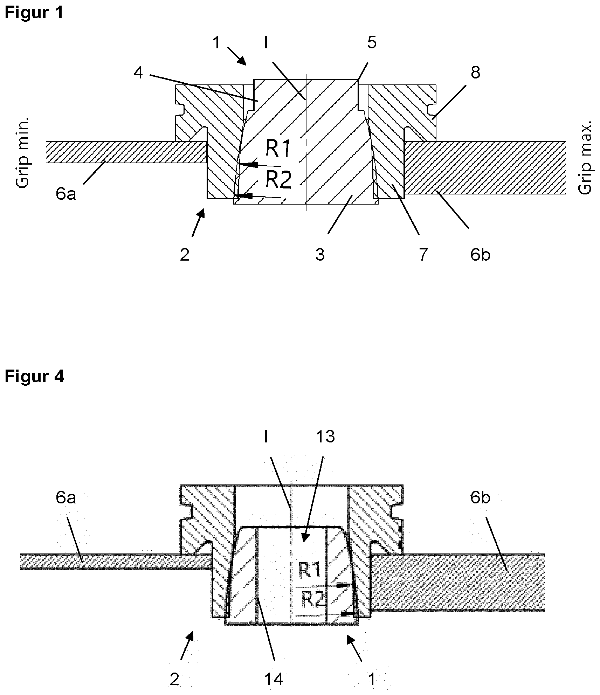

Der in Figur 1 dargestellte elektrische Anschluss weist einen Bolzen 1 sowie einen (Kontakt-)Ring 2 auf, von denen zumindest der Ring 2 elektrisch leitend ist, wobei der Bolzen 1 durch den Ring 2 gesteckt ist. Der Bolzen 1 erstreckt sich entlang einer ersten Längsachse I. Der Ring 2 erstreckt sich entlang einer zweiten Längsachse. In Figur 1 fallen die beiden Längsachsen zusammen.

Der Bolzen 1 weist einen Kopf 3 und einen Schaft 4 auf. Der Schaft 4 ist in der dargestellten Ausführungsform zylindrisch ausgebildet und weist ein nicht näher dargestelltes Außengewinde 5 auf, auf das eine nicht dargestellte Mutter aufgeschraubt werden kann. Alternativ kann der Schaft 4 mit einem Innengewinde oder einem Kreuzstift als Verbindungsmittel versehen sein.

Ein erstes, beispielsweise plattenförmiges, Bauteil ist ebenfalls elektrisch leitend ausgebildet und Bestandteil des elektrischen Anschlusses. In Figur 1 ist auf der linken Seite ein dünnes erstes Bauteil 6a angedeutet, während auf der rechten Seite der Figur ein dickeres erstes Bauteil 6b angedeutet ist. Dies dient zur Verdeutlichung des unterschiedlich großen Klemmbereichs (Grip), in dem der Ring 2 eine ausreichende Flächenpressung auf das erste Bauteil, beispielsweise eine Wand, ausüben kann. Abweichend von der Darstellung in Figur 1 hat das erste Bauteil typischerweise eine zumindest im Bereich des elektrischen Anschlusses konstante Wandstärke.

Der Ring 2 besteht aus einem weicheren, d.h. leichter plastisch verformbaren, Material als der Bolzen 1, beispielsweise Aluminium. Der Ring 2 wird durch einen Hülsenabschnitt 7 mit einer zentralen Öffnung und einem radial vorstehenden Anlagekragen 8 gebildet. In der dargestellten Ausführungsform ist der Anlagekragen 8 mit einer plastisch verformbaren Lippe ausgestaltet, mit der sich der Ring 2 an dem sich quer zur Längsachse erstreckenden ersten Bauteil (Wand) abstützen kann. Die plastisch verformbare Lippe des Anlagekragens 8 ist in radialer Richtung durch eine umlaufende Nut von dem Hülsenabschnitt 7 beabstandet.

In der dargestellten Ausführungsform ist der Kopf 3 als ein Rotationskörper gestaltet, dessen Außenkontur durch Rotation einer gekrümmten ersten Linie um die erste Längsachse I erzeugt wird. Die Linie ist beispielsweise ein Kreisabschnitt mit einem ersten Radius R1. Abweichend hiervon kann die erste Linie auch Bereiche mit unterschiedlichen Krümmungsradien aufweisen und/oder einen Ellipsenabschnitt aufweisen. Die erste Linie kann in der Nähe des dem Schaft 4 abgewandten Endes zumindest näherungsweise parallel zu der ersten Längsachse I verlaufen. Die erste Linie ist dabei derart relativ zu der ersten Längsachse I angeordnet und gestaltet, dass sich der Außendurchmesser des Kopfes 3 ausgehend von dem dem Schaft 4 zugewandten Ende zum gegenüberliegenden Ende vergrößert.

Die Durchgangsöffnung des Rings 2 kann innen ebenfalls als ein Rotationskörper gestaltet sein, dessen Kontur durch Rotation einer gekrümmten zweiten Linie um die zweite Längsachse erzeugt wird. Die zweite Linie ist beispielsweise ein Kreisabschnitt mit einem zweiten Radius R2. Der erste Radius R1 ist dabei vorzugsweise kleiner als der zweite Radius R2. Auch die zweite Linie kann Bereiche mit unterschiedlichen Krümmungsradien aufweisen und/oder einen Ellipsenabschnitt aufweisen. Die zweite Linie kann in der Nähe des in Figur 1 unteren Endes zumindest näherungsweise parallel zu der zweiten Längsachse verlaufen. Die zweite Linie ist dabei derart relativ zu der zweiten Längsachse angeordnet und gestaltet, dass sich der Innendurchmesser der Durchgangsöffnung des Rings 2 ausgehend von dem in Figur 1 oberen Ende mit dem Anlagekragen 8 zum gegenüberliegenden Ende vergrößert.

Grundsätzlich können der Kopf 3 und/oder der Ring 2 im Wesentlichen wie in einem der Ausführungsbeispiele der DE 10 2016 112 782 A1 beschrieben ausgebildet sein, wobei an dem Ring 2 eine wie in der DE 20 2018 101 358 U1 beschrieben nicht rotationssymmetrische Außenkontur, beispielsweise eine seitliche Abflachung, vorgesehen sein kann.

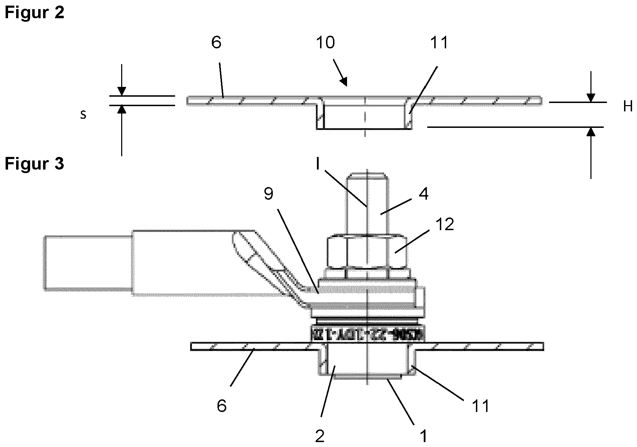

Die Figuren 2 und 3 zeigen Details eines erfindungsgemäßen elektrischen Anschlusses, mit dem ein in dem dargestellten Beispiel als Wand ausgebildetes erstes Bauteil 6 mit einer Anschlussklemme 9 verbunden wird. Hierzu wird ein beispielsweise wie in Figur 1 gezeigter Einsatz, d.h. der Bolzen 1 und der Ring 2, elektrisch leitend mit dem ersten Bauteil 6 verbunden.

Wie in den Figuren 2 und 3 gezeigt ist, weist das erste Bauteil 6 eine Durchgangsöffnung 10 auf, die mit einem Durchzug 11 versehen ist. In die Durchgangsöffnung 10 wird der Ring 2 mit dem Bolzen 1 eingesetzt, wobei der Anlagekragen 8 des Rings 2 auf der dem Durchzug 11 abgewandten Seite auf dem ersten Bauteil 6 aufliegt.

Das erste Bauteil 6 weist in dem dargestellten Beispiel eine Wanddicke s auf, die deutlich geringer als die Höhe H des Durchzugs 11 ist. Der Durchzug 11 bildet somit einen Kragen bzw. hülsenförmigen Abschnitt in dem ersten Bauteil 6 zur Aufnahme des Rings 2. abweichend von dem dargestellten Beispiel kann der Durchzug 11 auch leicht konisch ausgestaltet sein, insbesondere derart, dass sich der Innendurchmesser des Durchzugs 11 zu seinem freien Rand hin (in den Figuren 2 und 3 nach unten) aufweitet.

Zum Zweck der Stromübertragung wird eine mechanische Verbindung zwischen dem Bolzen 1 und dem ersten Bauteil 6 hergestellt. In der Montagesituation der Figur 3 ist der Bolzen 1 bereits mittels einer Mutter 12 in den Ring 2 hineingezogen, so dass der Schaft 4 vollständig durch das erste Bauteil 6 hindurchgetreten ist und sich der Kopf 3 des Bolzens 1 im Bereich der Durchgangsöffnung 10 des ersten Bauteils 6 befindet. Der Kopf 3 ist dabei so weit in die Durchgangsöffnung des Rings 2 eingedrungen, dass der Ring 2 mittels des Kopfes 3 plastisch verformt ist. Hierbei hat der Kopf 3 den Ring 2 derart aufgeweitet, dass dieser mit seiner Außenfläche radial mit der Durchgangsöffnung 10 und dem Durchzug 11 verpresst ist. Hierdurch wird ein elektrischer Kontakt mit geringem Übergangswiderstand zwischen dem Bolzen 1 über den Ring 2 mit der Innenseite der Durchgangsöffnung 10 und dem Durchzug 11 erreicht. Zudem hat der Kopf 3 den durch die Durchgangsöffnung 10 hervorstehenden Abschnitt des Rings 2, d.h. den dem Absatz 8 abgewandten Abschnitt, unter Ausbildung eines wulstartigen Überstands radial aufgeweitet. Hierdurch ist der Ring 2 auch in axialer Richtung, d.h. zwischen dem Anlagekragen 8 und dem wulstartigen Überstand, mit dem ersten Bauteil 6 verpresst. Die Anschlussklemme 9 ist dabei zwischen der Mutter 12 und dem Ring 2 auf dem Bolzen 1 festgespannt sein. Hierdurch wird die Anschlussklemme mittels des Einsatzes elektrisch mit dem ersten Bauteil 6, beispielsweise einer Wand, verbunden.

In den Figuren 1 und 3 ist der Bolzen 1 mit ähnlich einer Schraube mit dem Schaft 4 mit Außengewinde 5 und dem gegenüber diesem vergrößerten Kopf 3 ausgebildet, dessen Außenkontur an die Innenkontur des Rings 2 angepasst ist. In Figur 4 ist eine alternative Ausführungsform gezeigt, bei der der Bolzen 1 hülsenförmig, d.h. hohl, mit einer Durchgangsöffnung 13 ausgebildet ist und ein Innengewinde 14 aufweist. Dieses kann mit einem Werkzeug mit Außengewinde zusammenwirken, um den Bolzen 1 in den Ring 2 zu ziehen und diesen zu verformen. In Figur 4 ist der Durchzug 11 nicht gezeigt, kann aber wie in den Figuren 2 und 3 ausgebildet sein.

### Bezugszeichenliste

- 1: Bolzen
- 2: Ring
- 3: Kopf
- 4: Schaft
- 5: Außengewinde
- 6: erstes Bauteil (Wand)
- 6a: erstes Bauteil
- 6b: erstes Bauteil
- 7: Hülsenabschnitt
- 8: Anlagekragen
- 9: Anschlussklemme
- 10: Durchgangsöffnung
- 11: Durchzug
- 12: Mutter
- 13: Öffnung
- 14: Innengewinde

- I: erste Längsachse

- R1: erster Radius
- R2: zweiter Radius

- s: Dicke des ersten Bauteils 6
- H: Höhe des Durchzugs 11

## Patentansprüche

1. Elektrischer Anschluss mit einem, insbesondere plattenförmigen, ersten elektrisch leitenden Bauteil (6), das eine Öffnung (10) aufweist, einem Bolzen (1), der einen Kopf (3), der sich entlang einer ersten Längsachse (I) erstreckt, sowie Gewindeabschnitt (5, 14) aufweist, und einem elektrisch leitenden plastisch verformbaren Ring (2) mit einem Hülsenabschnitt (7), der eine Durchgangsöffnung mit einer zweiten Längsachse zur Aufnahme des Bolzens (1) aufweist, und einem Anlagekragen (8), **dadurch gekennzeichnet, dass** die Öffnung (10) des ersten Bauteils (6) mit einem Durchzug (11) versehen ist.

2. Elektrischer Anschluss nach Anspruch 1, **dadurch gekennzeichnet, dass** der Durchzug (11) als ein um die Öffnung (10) umlaufender Kragen ausgebildet ist, der auf der dem Anlagekragen (8) abgewandten Seite des ersten Bauteils (6) vorgesehen ist.

3. Elektrischer Anschluss nach Anspruch 1 oder 2, **dadurch gekennzeichnet, dass** der Durchzug (11) eine Höhe (H) aufweist, die um einen Faktor 1,5 bis 25, insbesondere um einen Faktor 2 bis 10, größer als die Dicke (s) des Materials des ersten Bauteils (6) ist.

4. Elektrischer Anschluss nach einem der vorhergehenden Ansprüche, **dadurch gekennzeichnet, dass** der Durchzug (11) konisch ist, wobei sich der Innendurchmesser der Öffnung (10) zum freien Rand des Durchzugs (11) hin verjüngt.

5. Elektrischer Anschluss nach einem der vorhergehenden Ansprüche, **dadurch gekennzeichnet, dass** die Öffnung (10) des ersten Bauteils (6) nicht rotationssymmetrisch ist, und dass der Hülsenabschnitt (7) eine nicht rotationsymmetrische Außenkontur aufweist.

6. Elektrischer Anschluss nach Anspruch 5, **dadurch gekennzeichnet, dass** der Hülsenabschnitt (7) eine im Wesentlichen zylindrische Außenkontur mit wenigstens einer, insbesondere parallel zur Längsachse (I) ausgerichteten, Abflachung aufweist.

7. Elektrischer Anschluss nach einem der vorhergehenden Ansprüche, **dadurch gekennzeichnet, dass** die Außenkontur des Kopfes (3) derart an die Innenkontur des Hülsenabschnitts (7) angepasst ist, dass der Kopf (3) drehfest in dem Hülsenabschnitt (7) geführt ist.

8. Elektrischer Anschluss nach einem der vorhergehenden Ansprüche, **dadurch gekennzeichnet, dass** der Anlagekragen (8) einen relativ zu dem übrigen Ring (2) größeren Außendurchmesser aufweist.

9. Elektrischer Anschluss nach einem der vorhergehenden Ansprüche, **dadurch gekennzeichnet, dass** der Ring (2) aus einem weicheren Material als der Bolzen (1) besteht.

10. Elektrischer Anschluss nach einem der vorhergehenden Ansprüche, **dadurch gekennzeichnet, dass** der Anlagekragen (8) radial durch eine Nut von dem Hülsenabschnitt (7) des Rings (2) beabstandet ist.

11. Elektrischer Anschluss nach einem der vorhergehenden Ansprüche, **dadurch gekennzeichnet, dass** der Kopf (3) eine Außenkontur aufweist, die wenigstens bereichsweise durch Rotation einer mit einem ersten Radius (R1) gekrümmten und von der ersten Längsachse (I) beabstandeten ersten Linie um die erste Längsachse (I) erzeugt und wenigstens bereichsweise größer als die Innenkontur der Durchgangsöffnung des Hülsenabschnitts (7) ist, und dass die Durchgangsöffnung des Rings (2) eine Innenkontur aufweist, die wenigstens bereichsweise durch Rotation einer mit einem zweiten Radius (R2) gekrümmten und von der zweiten Längsachse beabstandeten zweiten Linie um die zweite Längsachse erzeugt ist, wobei der Abstand der zweiten gekrümmten Linie von der zweiten Längsachse sich von einem Ende zum gegenüberliegenden Ende des Rings (2) vergrößert.

12. Elektrischer Anschluss nach einem der vorhergehenden Ansprüche, der zusätzlich eine Mutter (12) sowie eine Anschlussklemme (9) und/oder einen Kabelschuh aufweist.

13. Elektrischer Anschluss nach einem der vorhergehenden Ansprüche, **dadurch gekennzeichnet, dass** der Bolzen (1) mit einem Schaft (4) mit Außengewinde (5) und einem gegenüber diesem vergrößerten Kopf (3) ausgebildet ist.

14. Elektrischer Anschluss nach einem der Ansprüche 1 bis 12, **dadurch gekennzeichnet, dass** der Bolzen (1) ein Innengewinde (14) aufweist.

15. Elektrischer Anschluss nach Anspruch 14, **dadurch gekennzeichnet, dass** der Bolzen (1) hülsenförmig mit einer Durchgangsöffnung (13), in der das Innengewinde (14) vorgesehen ist, ausgebildet ist.

## Claims

1. Electrical connection comprising an, in particular platelike, first electrically conductive component (6) which has an opening (10), a bolt (1) comprising a head (3) which extends along a first longitudinal axis (I) and a thread section (5, 14), and an electrically conductive plastically deformable ring (2) having a sleeve section (7) comprising a through-opening with a second longitudinal axis for receiving the bolt (1), and a bearing collar (8), **characterized in that** the opening (10) in the first component (6) is provided with a passage (11).

2. Electrical connection according to Claim 1, **characterized in that** the passage (11) is configured as a collar which extends around the opening (10) and is provided on the side of the first component (6) which faces away from the bearing collar (8).

3. Electrical connection according to Claim 1 or 2, **characterized in that** the passage (11) has a height (H) which is greater than the thickness (s) of the material of the first component (6) by a factor of 1.5 to 25, in particular by a factor of 2 to 10.

4. Electrical connection according to any one of the preceding claims, **characterized in that** the passage (11) is conical, wherein the inner diameter of the opening (10) tapers toward the free edge of the passage (11).

5. Electrical connection according to any one of the preceding claims, **characterized in that** the opening (10) of the first component (6) is not rotationally symmetrical and that the sleeve section (7) has a non-rotationally symmetrical outer contour.

6. Electrical connection according to Claim 5, **characterized in that** the sleeve section (7) comprises a substantially cylindrical outer contour having at least one flattened portion which is in particular aligned parallel to the longitudinal axis (I).

7. Electrical connection according to any one of the preceding claims, **characterized in that** the outer contour of the head (3) is adapted to the inner contour of the sleeve section (7) such that the head (3) is held in the sleeve section (7) in a rotationally fixed manner.

8. Electrical connection according to any one of the preceding claims, **characterized in that** the bearing collar (8) has an outer diameter which is relatively larger than the rest of the ring (2).

9. Electrical connection according to any one of the preceding claims, **characterized in that** the ring (2) is made of a softer material than the bolt (1).

10. Electrical connection according to any one of the preceding claims, **characterized in that** the bearing collar (8) is radially spaced apart from the sleeve section (7) of the ring (2) by a groove.

11. Electrical connection according to any one of the preceding claims, **characterized in that** the head (3) has an outer contour which is produced, at least in regions, by rotating a first line which is curved with a first radius (R1) and spaced apart from the first longitudinal axis (I) about the first longitudinal axis (I) and, at least in regions, is larger than the inner contour of the through-opening of the sleeve section (7), and that the through-opening of the ring (2) has an inner contour which is produced, at least in regions, by rotating a second line which is curved with a second radius (R2) and spaced apart from the second longitudinal axis about the second longitudinal axis, wherein the distance of the second curved line from the second longitudinal axis increases from one end to the opposite end of the ring (2).

12. Electrical connection according to any one of the preceding claims which additionally comprises a nut (12) and a connecting terminal (9) and/or a cable lug.

13. Electrical connection according to any one of the preceding claims, **characterized in that** the bolt (1) is configured with a shaft (4) comprising an external thread (5) and a head (3) which is enlarged relative thereto.

14. Electrical connection according to any one of Claims 1 to 12, **characterized in that** the bolt (1) comprises an internal thread (14) .

15. Electrical connection according to Claim 14, **characterized in that** the bolt (1) is sleeve-shaped with a through-opening (13) in which the internal thread (14) is provided.

## Revendications

1. Connexion électrique comprenant un premier élément électriquement conducteur (6), en particulier en forme de plaque, qui a une ouverture (10), un boulon (1) comprenant une tête (3) qui s'étend le long d'un premier axe longitudinal (I) et une section filetée (5, 14), et une bague plastiquement déformable électriquement conducteur (2) ayant une section de manchon (7) comprenant une ouverture traversante avec un deuxième axe longitudinal pour la réception du boulon (1), et un collier d'appui (8), **caractérisé en ce que** l'ouverture (10) dans le premier élément (6) est fournie avec un passage (11).

2. Connexion électrique selon la revendication 1, **caractérisée en ce que** le passage (11) est configuré comme un collier qui s'étend autour de l'ouverture (10) et est fourni sur le côté du premier élément (6) qui est orienté à l'opposé du collier d'appui (8) .

3. Connexion électrique selon la revendication 1 ou 2, **caractérisée en ce que** le passage (11) présente une hauteur (H) qui est supérieure à l'épaisseur (s) du matériau du premier élément (6) d'un facteur de 1,5 à 25, en particulier d'un facteur de 2 à 10.

4. Connexion électrique selon l'une quelconque des revendications précédentes, **caractérisée en ce que** le passage (11) est conique, dans laquelle le diamètre intérieur de l'ouverture (10) diminue vers le bord libre du passage (11).

5. Connexion électrique selon l'une quelconque des revendications précédentes, **caractérisée en ce que** l'ouverture (10) du premier élément (6) n'est pas symétrique en rotation et **en ce que** la section de manchon (7) a un contour extérieur non symétrique en rotation.

6. Connexion électrique selon la revendication 5, **caractérisée en ce que** la section de manchon (7) comporte un contour extérieur sensiblement cylindrique ayant au moins une partie aplatie, qui est alignée en particulier parallèlement à l'axe longitudinal (I).

7. Connexion électrique selon l'une quelconque des revendications précédentes, **caractérisée en ce que** le contour extérieur de la tête (3) est adapté au contour intérieur de la section de manchon (7) de sorte que la tête (3) est maintenue dans la section de manchon (7) de manière fixe en rotation.

8. Connexion électrique selon l'une quelconque des revendications précédentes, **caractérisée en ce que** le collier d'appui (8) a un diamètre extérieur relativement plus grand que le reste de la bague (2).

9. Connexion électrique selon l'une quelconque des revendications précédentes, **caractérisée en ce que** la bague (2) est faite d'un matériau plus tendre que le boulon (1).

10. Connexion électrique selon l'une quelconque des revendications précédentes, **caractérisée en ce que** le collier d'appui (8) est espacé radialement de la section de manchon (7) de la bague (2) par une rainure.

11. Connexion électrique selon l'une quelconque des revendications précédentes, **caractérisée en ce que** la tête (3) a un contour extérieur qui est produit, au moins dans des régions, par la rotation d'une première ligne qui est incurvée avec un premier rayon (R1) et espacée du premier axe longitudinal (I) autour du premier axe longitudinal (I) et, au moins dans des régions, est plus grande que le contour intérieur de l'ouverture traversante de la section de manchon (7), et que l'ouverture traversante de la bague (2) a un contour intérieur qui est produit, au moins dans des régions, par la rotation d'une deuxième ligne qui est incurvée avec un deuxième rayon (R2) et espacée du deuxième axe longitudinal autour du deuxième axe longitudinal, dans laquelle la distance de la deuxième ligne incurvée à partir du deuxième axe longitudinal augmente à partir d'une extrémité jusqu'à l'extrémité opposée de la bague (2).

12. Connexion électrique selon l'une quelconque des revendications précédentes, qui comprend en plus un écrou (12) et un serre-fil (9) et/ou une cosse de câble.

13. Connexion électrique selon l'une quelconque des revendications précédentes, **caractérisée en ce que** le boulon (1) est réalisé avec une tige (4) comportant un filetage extérieur (5) et une tête (3) qui est agrandie par rapport à celui-ci.

14. Connexion électrique selon l'une quelconque des revendications 1 à 12, **caractérisée en ce que** le boulon (1) comporte un filetage intérieur (14).

15. Connexion électrique selon la revendication 14, **caractérisée en ce que** le boulon (1) est en forme de manchon avec une ouverture traversante (13) dans laquelle le filetage intérieur (14) est fourni.
